## Europäisches Patentamt

## European Patent Office

## Office européen des brevets

(11) Publication number: **0 221 627**
**B1**

## EUROPEAN PATENT SPECIFICATION

(45) Date of publication of the patent specification:
03.05.89

(51) Int. Cl.⁴: **F16C 1/22**

(21) Application number: **86304153.9**

(22) Date of filing: **02.06.86**

(54) **Self-adjust mini increment.**

(30) Priority: **13.09.85 US 775681**

(43) Date of publication of application:
**13.05.87 Bulletin 87/20**

(45) Publication of the grant of the patent:
**03.05.89 Bulletin 89/18**

(84) Designated Contracting States:
**DE FR GB IT**

(56) References cited:
**FR-A- 1 224 569**
**US-A- 3 662 617**
**US-A- 3 710 645**
**US-A- 4 175 450**
**US-A- 4 331 041**

(73) Proprietor: **TELEFLEX INCORPORATED, 155 S. Limerick Road, Limerick Pennsylvania 19468(US)**

(72) Inventor: **Spease, Arthur L., 15456 Fairlane Street, Livonia Michigan 48154(US)**

(74) Representative: **Walters, Frederick James, Urquhart-Dykes & Lord 91 Wimpole Street, London W1M 8AH(GB)**

## Description

### (1) Field of the Invention

The subject invention relates to a motion transmitting remote control assembly of the type wherein motion is transmitted in a curved path by a flexible motion-transmitting core element movably supported by a flexible conduit.

Such remote control assemblies normally include means adjacent each end of the conduit for attaching the conduit to a support structure with the core element extending from each end of the conduit. It is frequently desirable to adjust the length of the conduit to change the position at one end of the core element extending from the conduit once the assembly is installed. An example of such a situation is where a remote control assembly is utilized to interconnect the accelerator pedal and a throttle valve in automobiles. In this situation, the assembly is usually installed by attaching the conduit to the body of the automobile adjacent the accelerator pedal while attaching the end of the core element extending therefrom to the accelerator pedal. The opposite end of the conduit is attached to a support structure adjacent the carburetor so that the other or opposite end of the core element may be attached to the operating lever of the throttle valve. Frequently, however, the end of the core element adjacent the carburetor does not extend from the conduit a proper amount for attachment to the operating lever of the throttle valve. During such installation, the accelerator pedal is in its unmoved or idle position as is the operating lever of the throttle valve and if the end of the core element adjacent the operating lever of the throttle valve is not positioned correctly, the operating lever of the throttle valve must be moved for attachment of the core element so that the end result is that the accelerator pedal is in the idle position but the operating lever of the throttle valve is not. The position of the end of the core element extending from the conduit, i.e., the distance the core element extends from the conduit, may be changed by altering the length of the path over which the conduit extends.

### (2) Description of the Prior Art

There are assemblies known in the prior art where an adjustment in the length of the conduit may be accomplished in order to change the distance the core element extends from the end of the conduit during an installation procedure. One type of such assemblies includes a support member adapted for attachment to a support structure with a slider member movably supported by the support member for longitudinal movement and connected to the end of the conduit whereby the conduit effectively changes in length as the slider member moves relative to the support member. The support member movably supports a locking or latching member which engages the slider member to control the longitudinal movement of the adjustment of the slider member relative to the support member. In order to provide for automatic adjustment of the length of a conduit, the slider member may ratchet relative to the latching member whereby once the assembly is installed, as in the environment described above, the accelerator pedal may be pushed to the full throttle position placing the core element in tension to place a longitudinal force on the conduit whereby the slider member ratchets relative to the support member to the proper adjusted position. Each increment of adjustment of the slider member is a function of the size of the ratcheting means, i.e., is governed by the size or longitudinal length of the teeth on the ratcheting means. Presently, problems sometimes arise because the increment of movement of the slider member is too great. However, reduction of the size of the ratcheting means or teeth would correspondingly reduce the strength of the locking teeth. The present invention solves the problem without reducing the size or strength of the locking teeth.

### SUMMARY OF INVENTION

The subject invention relates to a motion-transmitting remote control assembly of the type for transmitting forces along a curved path by a motion transmitting core element movably supported within a flexible conduit with the ends of the core element extending from the ends of the conduit. The assembly includes a support member for supporting the conduit and locking means engageable with the conduit for controlling the longitudinal movement thereof relative to the support member. A conduit has a plurality of locking teeth spaced an equal distance apart longitudinally therealong. The assembly is characterized by the locking means supported by the support member and coacting with the teeth for locking the conduit against longitudinal movement at increments less than the distance between adjacent teeth.

### PRIOR ART STATEMENT

The broad concept of accomplishing the automatic adjustment of the length of a conduit upon movement of the core element is illustrated in U.S. Patent No. 3 662 617, granted May 16, 1972, in the name of William G. Bennett et al and U.S. Patent No. 3 710 645, granted January 16, 1973, in the name of William G. Bennett, both of which are assigned to the assignee of the subject invention. A more specific example of that concept is illustrated in U.S. Patent No. 4 331 041, granted May 25, 1982, in the name of William G. Bennett and assigned to the assignee of the subject invention. The latter patent discloses a system set out in the first part of claim 1 wherein a motion-transmitting remote control assembly of the type for transmitting forces along a curved path by a motion-transmitting core element and includes a support member which incorporates a single locking means engageable with the conduit for controlling the longitudinal movement of the conduit relative to the support member. The locking means comprises a single latch member which engages the ratcheting teeth of the slider member via a tooth on an aperture in the latch member. The latch member is biased into engagement with the slider member by a spring which holds the latch member in engagement with the slider member to prevent a change in length of the conduit when the conduit has been adjusted to the proper length.

All of the above-described prior assemblies have proven to be very satisfactory and well suited for most environments; however, there is a need for a remote control assembly wherein the smallest increment of adjustment of the slider member is reduced without sacrificing the strength of the locking means.

## BRIEF DESCRIPTION OF THE DRAWINGS

Other advantages of the present invention will be readily appreciated as the same becomes better understood by reference to the following detailed description when considered in connection with the accompanying drawings wherein:

Figure 1 is a side view of a preferred embodiment of the subject invention;

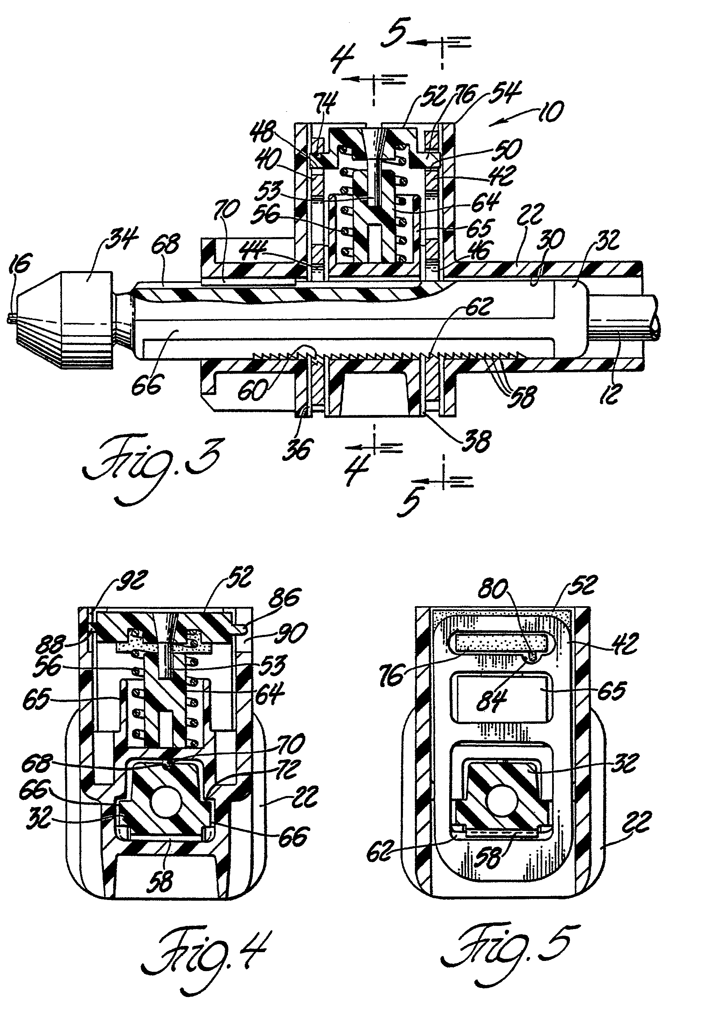

Figure 2 is an enlarged top view taken substantially along line 2–2 of Figure 1, and

Figure 3 is a cross-sectional view taken substantially along line 3–3 of Figure 2;

Figure 4 is a cross-sectional view taken substantially along line 4–4 of Figure 3; and

Figure 5 is a cross-sectional view taken substantially along line 5–5 of Figure 3.

## DESCRIPTION OF PREFERRED EMBODIMENT

A motion-transmitting remote control assembly constructed in accordance with the subject invention is generally shown at 10.

The assembly 10 includes a flexible conduit 12. The conduit 12 is preferably of the well known type including an inner tubular member made of organic polymeric material and surrounded by a plurality of long lay wires disposed helically thereabout with a casing of organic polymeric material disposed about the long lay wires and about the inner tubular member. A fitting 14 is attached to one end of the conduit 12 and is adapted by a flange with a hole therein for attaching the conduit to a support structure, such as the body of a vehicle.

A flexible motion-transmitting core element 16 is movably supported by the conduit 12 with the ends of the core element extending from the ends of the conduit. The motion-transmitting core element 16 is a wire member, as illustrated, but also may comprise metal strands helically wound together in cable-like fashion. A coupling member or terminal member 18 is disposed about the end of the core element for attachment of the core element to an operated or operating member. A slug 20 retains the terminal member 18 upon the core element. The opposite end of the core element 16 may include a similar terminal member as that shown at 18. The terminal member 18 is slidable along the core element 16 and includes a pocket for receiving the head of a pin, or the like, extending from an operated or operating member.

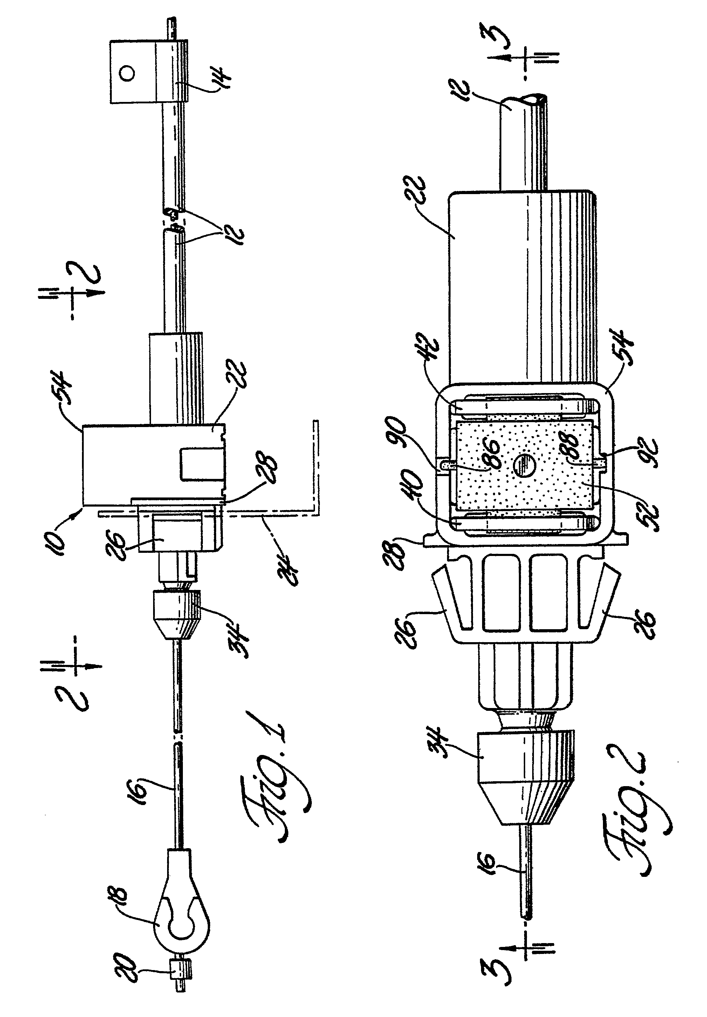

The assembly also includes a support member 22 adapted for attachment to a support structure such as the supporting bracket 24 shown in phantom in Figure 1. The support member 22 is adapted for attachment to a support structure by snap-in means 26. The snap-in means 26 are inserted through an opening in a support member such as the bracket 24 to retain the support member 22 attached to the support bracket 24. Adjacent the snap-in means 26 is a flange 28 which forms a part of the support member 22. The snap-in means 26 may be of the type forming the subject matter of U.S. Patent No. 3 427 894, granted to August E. Tschanz on February 18, 1969, and assigned to the assignee of the subject invention.

The support member 22 includes a passageway 30 extending therethrough. Shoulders 72 project from support member 22 into passageway 30 and extend parallel to the longitudinal axis of the passageway 30. The conduit 12 includes a slider member 32 movably supported in the passageway 30. The slider member 32 is preferably of a rigid organic polymeric material molded about the plastic exterior of the conduit 12. The slider member 32 includes shoulders 66 on either side of the slider member 32 extending parallel to the longitudinal axis of the slider member 32. A groove 68 disposed centrally in the top portion of the slider member 32 extends parallel to the longitudinal axis of the slider member 32 and is engaged by guide means 70 extending downwardly from the support member 22 into passageway 30. The shoulders 66 and the groove 68 together with guide means 70, which is a tab, increase the stability of the remote control assembly. A swivelling dust cover and/or core wiper 34 is supported through a swivel socket on the end of the slider member 32.

The support member 22 also includes a pair of guideways 36 and 38 extending traversely to the passageway 30 and through the support member 22.

The assembly also includes alternately coacting locking means including a pair of latch members 40 and 42 alternately engageable with the slider member 32 of the conduit for alternately controlling the longitudinal movement of the conduit relative to the support member 22. More specifically, when one latch member is engaged with the slider member 32, the other latch member is disengaged. In addition, when either latch member 40 or 42 is engaged with slider member 32, shoulders 66 on slider member 32 abut shoulder 72 extending from the support member 22 into passageway 30 and provide a further support and stability to the assembly.

The latch members 40 and 42 are movably supported in guideways 36 and 38 respectively and have apertures 44 and 46 respectively therethrough with the slider member 32 extending through the lower apertures 44 and 46 of latch members 40 and 42 respectively. The latch members 40 and 42 have upper apertures 48 and 50 respectively located at their upper ends. A rectangular cap member 52 includes lips 74 and 76 extending horizontally and outwardly from either sides of the cap member 52 along the longitudinal axis of the cap member 52. The cap member 52 is disposed within a protective wall 54 of the support member 22 and is biased upwardly by biasing means 56. The lips 74 and 76 extend through apertures 48 and 50 of latch members 40 and 42 respectively and include latch orientating means 80 which are tabs projecting downwardly from the under side of each lip 74 and 76 and which mate with notches 84 in latch members 40 and 42 respectively. The latch orientating means 80 of lip 76, which is shown in Figure 5 mating with notch 84 of latch member 42, is also located on lip 74 and mates with notch 84 of latch member 40 but both the latch orientating means 80 and the notch 84 are located on the other side of the center line of Figure 5. That is to say, the latch orientating means and notch of lip 74 and latch member 40 are asymmetrical with respect to the lip 76 and latch member 42 as shown in Figure 5 and visa versa.

The cap member 52 also includes guide means 86 and 88 which are projections of unequal size and which extend outwardly and horizontally from either of the shorter sides of the rectangular cap member 52. The guide means 86 mates with slot 90 in the protective wall 54 and guide means 88 mates with notch 92 disposed opposite to slot 90 in protective wall 54. The aforementioned guide means aid in assembly of the subject invention as well as providing stability in use. The biasing means comprises a coil spring 56 reacting between the support member 22 and the cap member 52 for urging the cap member 52 into engagement with the latch members 40 and 42 which, in turn, alternately engage the slider member 32 of the conduit depending upon the position of the slider member. The cap member 52 is capable of pivotal movement with respect to the biasing means 56 such that one of either latch members 40 and 42 may be independently disengaged while the other one remains undisturbed. The biasing means 56 also allows the latch members 40 and 42 to be moved out of engagement with the slider member 32 in response to a predetermined force. The lower end of the spring 56 is disposed within a cavity in the support member 22 while the upper end engages the underside of the cap member 52.

Coacting ratcheting means comprising a plurality of locking teeth 58 on the slider member 32 and a single tooth 60 and 62 defined by the lower edge of apertures 44 and 46 on latch members 40 and 42 respectively are included for automatically allowing the conduit 12 to move longitudinally relative to the support member 22 in response to a predetermined longitudinal force applied to the conduit through the core element whereby the distance the core element extends from the conduit may be adjusted. As explained above, in certain situations where tension is placed upon the core element 16, a force will be applied to the conduit when in a tortuous path urging the conduit to shorten in length between its supports and in such a situation the slider member 32 will ratchet forwardly to an adjusted position. Utilizing a plurality of latch members which alternately engage slider member 32, allows for a smaller, more precise increment of adjustment movement of the slider member 32 while maintaining the locking strength of the coacting ratcheting means. In addition, of course, the latch members 40 and 42 may be manually urged against the spring 56 to manually adjust the effective length of the conduit 12. Specifically, the teeth 58 on the slider member 32 and the single teeth 60 and 62 on latch members 40 and 42 respectively have a ratcheting configuration for allowing movement of the slider member 32 in one direction to the left, as illustrated in Figure 3, relative to the support member 22 while engaged by one of the latch members either 40 or 42 but prevent such movement in the opposite direction while engaged by either latch member thereby effecting automatic ratcheting adjustment in the effective length of the conduit.

The assembly also includes a temperature-responsive means comprising an elongated slug 64 reacting between the support member 22 and the cap member 52 in parallel with the spring 56 for allowing movement of the latch members 40 and 42 in response to a predetermined force in a predetermined temperature range and for requiring higher forces to move the latch members 40 and 42 than the predetermined force at temperatures out of the predetermined temperature range. Cap member 52 reacts with slug 64 through pin 53 which extends from cap member 52 into slug 64. Spring 56 and slug 64 are disposed within and supported by a cup 65 of the support member 22. The operation of the slug 64 may be of the type forming the subject matter of U.S. Patent No. 4 331 041 granted to William G. Bennett on May 25, 1982 and assigned to the assignee of the subject invention. Specifically, the slug 64 would allow normal operation of the latch members 40 and 42 in a normal ambient temperature range but would offer greater resistance to the movement of the latch member as temperatures fall below that temperature range. By way of example, the slug 64 may have no effect upon the latch members 40 and 42 in its coaction with the spring 56 during assembly at an automotive plant to obtain the desired adjusted length of the conduit. However, should the automobile be subjected to cold temperatures which increase the forces necessary to be transmitted by the core element 16, the slug would become more resistive to require a greater force to move the latch members 40 and 42 thereby preventing automatic or inadvertent adjustment in the length of the conduit to an undesired position.

The slug is made of a normally resilient organic polymeric material which increases in hardness with a decrease in temperature. As will be appreciated, the spring 56 and the slug 64 will be placed in compression upon disengaging movement of the latch members 40 and 42.

In one preferred embodiment the slug 64 was made of a polyacrylate having a durometer between 60 and 90.

All of the components except the core element 16 and the latch members 40 and 42 and the spring 56 are preferably made of organic polymeric or plastic materials.

## Claims

1. A motion transmitting remote control assembly of the type for transmitting forces along a curved path by a motion transmitting core element, said assembly comprising; a flexible conduit (12) having opposite ends, a flexible motion transmitting core element (16) movably supported by said conduit (12), a support member (22) for supporting said conduit (12), locking means (40, 42) engageable with said conduit (12) for controlling the longitudinal movement thereof relative to said support member (22), said conduit (12) having a plurality of locking teeth (58) spaced an equal distance apart longitudinally therealong and characterized by said locking means (40, 42) supported by said support member (22) and coacting with said locking teeth (58) for locking said conduit (12) against longitudinal movement at increments less than the distance between adjacent locking teeth (58).

2. An assembly as set forth in claim 1 further characterized by said locking means including a plurality of latch members (40, 42) for independently engaging said locking teeth (58) for establishing said increments of adjustment less than said distance between adjacent locking teeth (58).

3. An assembly as set forth in claim 2 further characterized by said latch members (40, 42) being supported by said support means (22) a distance apart which is not a multiple of said distance between adjacent locking teeth (58) whereby only one of said latch members (40, 42) is in locking engagement with said teeth (58) at any given position.

4. An assembly as set forth in claim 3 further characterized by said conduit (12) including conduit orientating means (68) disposed centrally in the top portion of said conduit (12) and extending parallel to the longitudinal axis of said conduit (12) and engaged by guide means (70) extending downwardly from said support structure (22) and engaging said conduit orientating means (68) in said conduit (12).

5. An assembly as set forth in claim 3 further characterized by said locking means including biasing means (56) for urging said latch members (40, 42) into engagement with said teeth (56).

6. An assembly as set forth in claim 5 wherein said conduit orientating means on said conduit (12) is a groove (68) and said guide means on said conduit is a tab (70).

7. An assembly as set forth in claim 5 further characterized by said locking teeth (58) and latch members (40, 42) include coacting ratcheting surfaces for automatically allowing said conduit (12) to move longitudinally in one direction relative to said support member (22) in response to a predetermined longitudinal force applied to said conduit (12) through said core element (16).

8. An assembly as set forth in claim 5 further characterized by said latch members (40, 42) being plates having apertures (44, 46, 48, 50) at both ends therethrough with said conduit (12) extending through said apertures (44, 46) at one end and a cap member (52) including peripheral lips (74, 76) extending through the apertures (48, 50) at the other end.

9. An assembly as set forth in claim 8 further characterized by said lips (74, 76) including latch orientating means (80) for mating with notches (84) in said latch members (40, 42).

10. An assembly as set forth in claim 9 further characterized by said cap member (52) being urged into engagement with said latch members (40, 42) by said biasing means (56) and said cap member (52) capable of pivotal movement with respect to said biasing means (56) such that one of said latch members (40, 42) may be independently disengaged while the other one remains undisturbed.

11. An assembly as set forth in claim 10 wherein said latch orientating means are tabs (80) which project downwardly from the underside of each lip (74, 76).

12. An assembly as set forth in claim 11 wherein said support member (22) includes a passageway (30) extending therethrough, a plurality of guideways (36. 38) extending traversely to said passageway (30) and said latch members (40, 42) movably supported in said guideways (36, 38).

13. An assembly as set forth in claim 12 wherein said cap member (52) is rectangular and includes guide means (86, 88) for providing stability.

14. An assembly as set forth in claim 13 further characterized by said conduit (12) including a slider member (32) slidably supported in said passageway (30) and said slider member (32) having said plurality of said locking teeth (58).

15. An assembly as set forth in claim 14 wherein said guide means are projections (86, 88) which extend into a slot (90) on one side of said support structure and into a notch (92) on the other side of said support member (22).

16. An assembly as set forth in claim 15 further characterized by said locking teeth (58) on said slider member (32) and said latch members (40, 42) having a ratcheting configuration for allowing movement of said slider member (32) in one direction relative to said support member (22) while engaged by said latch members (40, 42) and preventing such movement in the opposite direction while engaged by said latch members (40, 42).

17. An assembly as set forth in claim 16 whereby said projections ( 86, 88) are of unequal size and which extend outwardly and horizontally from either of the shorter sides of said rectangular cap member (58).

18. An assembly as set forth in claim 17 further characterized by a temperature-responsive means (64) reacting between said support member (22) and said latch members (40, 42) in parallel with said biasing means (56) for allowing movement of said latch members (40, 42) in response to said predetermined force in a predetermined temperature range and for requiring higher forces than said predetermined force at temperatures out of said predetermined temperature range.

19. An assembly as set forth in claim 18 wherein said biasing means comprises a coil spring (56) and said temperature-responsive means comprises an elongated slug (64), said spring (56) and said slug (64) engaging said cap member (52) and reacting between said support member (22) and said cap member (56).

**Revendications**

1. Ensemble de télécommande à transmission de mouvement pour transmettre des forces suivant un chemin courbe par une âme de transmission de mouvement, ensemble comprenant un tube souple (12) ayant deux extrémités opposées, une âme souple (16) pour la transmission du mouvement, cette âme étant logée de manière mobile dans le tube (12), un élément de support (22) pour porter le tube (12), des moyens de verrouillage (40, 42) coopérant avec le tube (12) pour en régler le mouvement longitudinal par rapport à l'élément de support (22), le tube (12) ayant un ensemble de dents de verrouillage (58) équidistantes dans la direction longitudinale, élément caractérisé par des moyens de verrouillage (40, 42) portés par l'élément de support (22) et coopérant avec les dents de verrouiller le tube (12) en mouvement longitudinal suivant des pas inférieurs à la distance entre les dents de verrouillage adjacentes (58).

2. Ensemble selon la revendication 1, caractérisé en outre en ce que les moyens de verrouillage se composent d'un ensemble d'éléments de verrouillage (40, 42) coopérant de manière indépendante avec les dents de verrouillage (58) pour définir des pas de réglage inférieurs à la distance entre les dents de verrouillage adjacentes (58).

3. Ensemble selon la revendication 2, caractérisé en ce que ls éléments de verrouillage (40, 42) sont portés par l'élément de support (22) à une certaine distance qui n'est pas un multiple de la distance entre les dents de verrouillage adjacentes (58) et un seul des éléments de verrouillage (40, 42) coopère en verrouillage avec les dents (58) dans n'importe quelle position.

4. Ensemble selon la revendication 3, caractérisé en ce qu'en outre le tube (12) comporte un moyen d'orientation de tube (68) placé en position centrale dans la partie supérieure du tube (12) et parallèlement à l'axe longitudinal du tube (12) en coopérant avec le moyen de guidage (70) qui est en saillie vers le bas de la structure de support (22) et coopère avec le moyen d'orientation (68) du tube (12).

5. Ensemble selon la revendication 3, caractérisé par un moyen de verrouillage comprenant un moyen de poussée (56) pour pousser les éléments de verrouillage (40, 42) en contact avec les dents (56).

6. Ensemble selon la revendication 5, caractérisé en ce que le moyen d'orientation de tube prévu sur le tube (12) est une gorge (68) et le moyen de guidage prévu sur la conduite est une patte (70).

7. Ensemble selon la revendication 5, caractérisé en ce que les dents de verrouillage (58) et les éléments de verrouillage présentent des surfaces d'encliquetage correspondantes pour permettre automatiquement au tube (12) de se déplacer longitudinalement dans une direction par rapport à l'élément de support (22) sous l'action d'une force longitudinale prédéterminée exercée sur le tube (12) par l'âme (16).

8. Ensemble selon la revendication 5, caractérisé en ce que les éléments de verrouillage (40, 42) sont des plaques avec des orifices (44, 46, 48, 50) aux deux extrémités, les orifices (44, 46) d'une extrémité étant traversés par le tube (12) et un couvercle (52) avec des lèvres périphériques (74, 76) traverse les orifices (48, 50) à l'autre extrémité.

9. Ensemble selon la revendication 8, caractérisé en ce que les lèvres (74, 76) omprennent des moyens d'orientation de verrouillage (80) correspondant aux encoches (84) des éléments de verrouillage (40, 42).

10. Ensemble selon la revendication 9, caractérisé en ce que le couvercle (52) est poussé en contact avec les éléments de verrouillage (40, 42) par le moyen de poussée (56) et le couvercle (52) peut pivoter par rapport au moyen de poussée (56) de façon que l'un des éléments de verrouillage (40, 42) puisse se dégager indépendamment de l'autre qui reste en place.

11. Ensemble selon la revendication 10, caractérisé en ce que le moyen d'orientation de verrouillage est constitué par des pattes (80) en saillie vers le bas par rapport à la face inférieure de chaque lèvre (74, 76).

12. Ensemble selon la revendication 11, caractérisé en ce que l'élément de support (22) est muni d'un passage traversant (30), un ensemble de passage de guidage (36, 38) traversant le passage (30) et recevant de manière mobile les éléments de verrouillage (40, 42).

13. Ensemble selon la revendication 12, caractérisé en ce que le couvercle (52) est rectangulaire et comprend des moyens de guidage (86, 88) assurant la stabilité.

14. Ensemble selon la revendication 13, caractérisé en ce que le tube (12) est muni d'un coulisseau (32) logé en coulissement dans le passage (30), le coulisseau (32) ayant un ensemble de dents de verrouillage (58).

15. Ensemble selon la revendication 14, caractérisé en ce que le moyen de guidage est formé de parties en saillie (86, 88) qui passent dans une fente (90) d'un côté de la structure de support et dans une encoche (92) de l'autre côté de l'élément de support (22).

16. Ensemble selon la revendication 15, caractérisé en ce que les dents de verrouillage (58) du coulisseau (32) et des éléments de verrouillage (40, 42) ont une forme d'encliquetage permettant le mouvement du coulisseau (32) dans une direction par rapport à l'élément de support (22) tout en coopérant avec les éléments de verrouillage (40, 42), en interdisant le mouvement dans la direction opposée tout en coopérant avec les éléments de verrouillage (40, 42).

17. Ensemble selon la revendication 16, caractérisé en ce que les parties en saillie (86, 88) ont des dimensions différentes et s'étendent vers l'éxtérieur et horizontalement des petits côtés du couvercle rectangulaire (58).

18. Ensemble selon la revendication 17, caractérisé en outre par un élément thermo-sensible (64) agissant entre l'élément de support (22) et les éléments de verrouillage (40, 42) sous l'action d'une force prédéterminée pour une température comprise dans une plage de températures prédéterminée ce mouvement nécessitant des forces plus importantes que la force prédéterminée pour des températures situées en dehors de la plage prédéterminée des températures.

19. Ensemble selon la revendication 18, caractérisé en ce que le moyen de poussée est formé d'un ressort hélicoïdal (56) et le moyen thermo-sensible est une patte allongée (64), le ressort (56) et la patte (64) coopérant avec le couvercle (52) et réagissant entre l'élément de support (22) et le couvercle (56).

**Patentansprüche**

1. Fernsteuer-Anordnung zur Bewegungsübertragung, insbesondere zur Übertragung von Kräften entlang eines gekrümmten Pfades mit Hilfe eines Bewegungen übertragenden Kernelements, mit einem flexiblen Führungselement (12) mit einander gegenüberliegenden Enden, mit einem flexiblen, von dem Führungselement (12) beweglich gehaltenen Bewegungen übertragenden Kernelement (16), mit einem Supportglied (22) zur Halterung des Führungselementes (12), mit dem Führungselement (12) in Eingriff bringbaren Riegelelementen (40, 42) zwecks Steuerung dessen Längsbewegung in bezug auf das Supportglied (22), wobei längs des Führungsgliedes (12) eine Vielzahl von jeweils gleichen Abstand aufweisenden Sperrzähnen (58) vorgesehen sind, dadurch gekennzeichnet, daß die Riegelelemente (40, 42) von dem Supportglied (22) getragen sind und mit den Sperrzähnen (58) zwecks Festlegung des Führungselementes (12) gegenüber Längsbewegungsschritten zusammenwirken, die kleiner als die Distanz zwischen benachbarten Sperrzähnen (58) sind.

2. Anordnung nach Anspruch 1, dadurch gekennzeichnet, daß die Riegelelemente eine Mehrzahl von Klinkengliedern (40, 42) aufweisen, die unabhängig voneinander mit den Sperrzähnen (58) in Eingriff bringbar sind zwecks Darstellung der festgelegten Bewegungsschritte kleiner als der Abstand zwischen benachbarten Sperrzähnen (58).

3. Anordnung nach Anspruch 2, dadurch gekennzeichnet, daß die Klinkenglieder (10, 12) in dem Supportglied (22) in einem Abstand voneinander gelagert sind, der kein Vielfaches der Distanz zwischen benachbarten Sperrzähnen (58) ist, wobei in jeder gegebenen Position lediglich eines der Klinkengliedern (40, 42) in Eingriff mit den Sperrzähnen ist.

4. Anordnung nach Anspruch 3, dadurch gekennzeichnet, daß das Führungselement (12) auf seinem oberen Bereich an zentraler Stelle ein lagebestimmendes Element (68) aufweist, das sich parallel zur Längsachse des Führungselementes (12) erstreckt und in das ein senkrecht nach unten sich erstreckendes, vom Supportglied (22) getragenes Führungselement (70) zwecks Lagebestimmung des Führungselementes eingreift.

5. Anordnung nach Anspruch 3, dadurch gekennzeichnet, daß den Klinkengliedern (40, 42) ein Vorspannung erzeugendes Element (56) zugeordnet ist, um diese in Eingriff mit den Sperrzähnen (58) zu halten.

6. Anordnung nach Anspruch 4, dadurch gekennzeichnet, daß das lagebestimmende Element auf dem Führungselement (12) eine Nute (68) und das eingreifende Führungselement eine Leiste (70) ist.

7. Anordnung nach Anspruch 5, dadurch gekennzeichnet, daß die Sperrzähne (58) und die Klinkenglieder (40, 42) ein Gesperre bildende Oberflächen umfassen für die selbsttätige Längsbewegung des Führungselementes (12) in einer Richtung relativ zum Supportglied (22) in Abhängigkeit zu einer vorbestimmten übr das Kernelement (16) aufgebrachten und auf das Führungsglied einwirkenden Längskraft.

8. Anordnung nach Anspruch 5, dadurch gekennzeichnet, daß die Klinkenglieder (40, 42) plattenförmig ausgebildet sind und an beiden Enden Durchbrüche (44, 46, 48, 50) aufweisen, durch die (44, 46) an dem einen Ende das Führungselement (12) und durch die (48, 50) am anderen Ende ein Abdeckglied (52) mit an seinem Umfang angeordneten Lippen (74, 76) greifen.

9. Anordnung nach Anspruch 8, dadurch gekennzeichnet, daß die Lippen (74, 76) Riegelorientierungsorgane (80) umfassen, die mit einer Aussparung (84) in den Klinkengliedern (40, 42) zusammenwirken.

10. Anordnung nach Anspruch 9, dadurch gekennzeichnet, daß das Abdeckglied (52) durch das Vorspannung erzeugende Element (56) in Eingriff mit den Klinkengliedern (40, 42) gehalten ist, und daß das Abdeckglied (52) in bezug auf das Element (56) derart drehbeweglich ist, daß eines der Klinkenglieder (40, 42) unabhängig von dem anderen Klinkenglied außer Eingriff bringbar ist, während das andere Klinkenglied unbeeinflußt bleibt.

11. Anordnung nach Anspruch 10, dadurch gekennzeichnet, daß die Riegelorientierungsorgane als Leisten (80) ausgebildet sind, die sich von der Unterseite einer jeden Lippe (74, 76) aus nach unten erstrecken.

12. Anordnung nach Anspruch 11, dadurch gekennzeichnet, daß das Supportglied (22) eine es durch setzende Durchgangsöffnung (30) sowie mehrere quer zu der Durchgangsöffnung (30) sich erstreckende Führungsbahnen (36, 38) zwecks beweglicher Lagerung der Klinkenglieder (40, 42) aufweist.

13. Anordnung nach Anspruch 12, dadurch gekennzeichnet, daß das Abdeckglied (52) rechtwinklig ausgebildet ist und seiner Stabilisierung dienende Führungsglieder (86, 88) aufweist.

14. Anordnung nach Anspruch 13, dadurch gekennzeichnet, daß das Führungselement (12) als Gleitorgan (32) ausgebildet ist, das in der Durchgangsöffnung (30) verschiebbar gelagert ist, und daß das Gleitorgan (32) eine Vielzahl von Sperrzähnen (58) aufweist.

15. Anordnung nach Anspruch 14, dadurch gekennzeichnet, daß die Führungsglieder als Vorsprünge (86, 88) ausgebildet sind, die sich an der einen Seite in Schlitze (90) der Wandung des Supportgliedes (22) und an der anderen Seite in eine Nut (92) des Supportgliedes erstrecken.

16. Anordnung nach Anspruch 15, dadurch gekennzeichnet, daß die Sperrzähne (58) auf dem Gleitorgan (32) und die Klinkenglieder (40, 42) eine Gesperre-Ausbildung aufweisen, um bei Eingriff der Klinkenglieder das Bewegen des Gleitorgans in der einen Richtung relativ zum Supportglied (22) zu ermöglichen, während in der entgegengesetzten Richtung bei Eingriff der Klinkenglieder seine Bewegung verhindert ist.

17. Anordnung nach Anspruch 16, dadurch gekennzeichnet, daß die Vorsprünge (86, 88) von ungleicher Größe sind und von jeder Seite des rechteckigen Abdeckgliedes (52) aus sich nach außen horizontal erstrecken.

18. Anordnung nach Anspruch 17, dadurch gekennzeichnet, daß ein temperaturabhängiges Schaltglied (64) zwischen dem Supportglied (22) und den Klinkengliedern (40, 42) wirkungsmäßig parallel zum Vorspannung erzeugenden Element (56) angeordnet ist, um den Klinkengliedern (40, 42) in Abhängigkeit der genannten Vorspannung in einem vorbestimmten Temperaturbereich eine Bewegung zu ermöglichen und um die Betätigungskraft außerhalb dieses Temperaturbereiches zu erhöhen.

19. Anordnung nach Anspruch 18, dadurch gekennzeichnet, daß das Vorspannung erzeugende Element eine Spulenfeder (56) und daß das temperaturabhängige Schaltgied ein Stab (64) ist, wobei die Spulenfeder (56) und der Stab (64) zwischen dem Supportglied (22) und dem Abdeckglied wirkend mit dem Abdeckglied (52) in Eingriff stehen.

*Fig. 1*

*Fig. 2*

EP 0 221 627 B1

Fig.3

Fig.4

Fig.5